# EUROPÄISCHE PATENTANMELDUNG

(11) **EP 2 692 967 A2**
(43) Veröffentlichungstag der Anmeldung: **05.02.2014**
(21) Anmeldenummer: 13179018.0
(22) Anmeldetag: 02.08.2013
(51) Int. Cl.: E04H 12/08

(54) **Verfahren zum Errichten eines Turmes aus Stahl einer Windenergieanlage und Turm aus Stahl für eine Windenergieanlage**

(30) Priorität: 04.08.2012 DE 102012015489
(71) Anmelder: e.n.o. energy systems GmbH, DE-18055 Rostock (DE)
(72) Erfinder: Porm, Karsten, 18236 Kröpelin/Diedrichshagen (DE); Bull, Michael, 18198 Kritzmow/Groß Schwaß (DE); Bockholt, Stefan, 18255 Kühlungsborn (DE); Martin, Hörenz, 18147 Rostock (DE)
(74) Vertreter: 2SPL Patentanwälte

(57) **Zusammenfassung**

Verfahren zur Errichtung eines Turmes aus Stahl (7) einer Windenergieanlage (12), bei dem hohlzylindrische und/oder hohlkegel-stumpfförmige Turmsegmente (1, 2, 3, 4, 5, 6) miteinander verbunden werden. Das Verfahren ist dadurch gekennzeichnet, dass mindestens zwei hohlzylindrische und/oder hohlkegelstumpfförmige Turmsegmente (1, 2, 3) in einem unteren Bereich des Turmes durch ein Unterpulverschweißverfahren an einem Ort der Errichtung des Turmes (7) zusammengefügt und weitere hohlzylindrische und/oder hohlkegelstumpfförmige Turmsegmente (4, 5, 6) für den oberen Bereich des Turms (7) untereinander mittels Flansch- und/oder Schweißverbindungen verbunden werden. Hierdurch kann gegebenenfalls ein Kompromiss hinsichtlich eines Straßen- und/oder Bahntransports, eines Zusammenfügens von Turmsegmenten vor Ort sowie einer Wartung über eine Auslegungslebensdauer der Windenergieanlage verbessert werden.

## Beschreibung

Ausführungsbeispiele beziehen sich auf ein Verfahren zum Errichten eines Turmes aus Stahl für eine Windenergieanlage und einen Turm aus Stahl für eine Windenergieanlage.

Die Verknappung fossiler Brennstoffe, wie auch mit ihrer Verbrennung einhergehender Einflüsse auf die Umwelt, aber auch Probleme hinsichtlich Sicherheit und Lagerung verbrauchter nuklearer Brennstoffe beim Einsatz nuklearer Techniken führt dazu, dass ein Interesse an erneuerbaren bzw. ökologisch verträglicheren Energiequellen steigt. Neben der Solartechnik stellt so beispielsweise der Einsatz von Windenergieanlagen eine solche umweltverträglichere Technologie zur Versorgung mit Energie dar.

Beispielsweise im Hinblick auf eine mögliche Effizienz einer Windenergieanlage kann es gegebenenfalls von Interesse sein, eine Nabenhöhe einer solchen Windenergieanlage zu steigern, da beispielsweise aufgrund von Reibungseffekten tendenziell eine Windgeschwindigkeit mit steigendem Abstand von einer Geländeoberkannte zunimmt.

Bei der Errichtung von Windenergieanlagen werden oft Stahlrohrtürme aufgrund ihrer vergleichsweise geringen Masse, ihrer mechanischen Eigenschaften und des schnellen Aufbaus verwendet. Da jedoch der Straßen- und Bahntransport eines Turmes mit einer Höhe von oft mehr als 100 m aufgrund herrschender Größenbeschränkungen auf den Transportwegen nicht als Einzelteil möglich ist, werden zunächst Segmente mit einer Höhe von typischerweise 10 m bis 30 m gefertigt und auf der Bausteile bei der Errichtung des Turms miteinander verbunden.

Viele konventionelle Verfahren weisen hier jedoch aufgrund unterschiedlichster Aspekte Nachteile auf, falls diese überhaupt sinnvoll bei der Errichtung von Türmen mit einer Höhe von mehr als 100 m einsetzbar sind.

Es besteht so ein Bedarf, ein Verfahren zur Errichtung eines Turmes aus Stahl für eine Windenergieanlage und einen Turm aus Stahl für Windenergieanlagen zu schaffen, bei dem ein Kompromiss hinsichtlich eines Straßen- und/oder Bahntransports, eines Zusammenfügens von Turmsegmenten vor Ort sowie einer Wartung über eine Auslegungslebensdauer der Windenergieanlage verbessert wird. Diesem Bedarf tragen ein Verfahren gemäß Anspruch 1 und ein Turm aus Stahl gemäß Anspruch 8 Rechnung.

Ein Verfahren zur Errichtung eines Turmes aus Stahl einer Windenergieanlage gemäß einem Ausführungsbeispiel, bei dem hohlzylindrische und/oder hohlkegelstumpfförmige Turmsegmente miteinander verbunden werden, ist dadurch gekennzeichnet, dass mindestens zwei hohlzylindrische und/oder hohlkegelstumpfförmige Turmsegmente in einem unteren Bereich des Turmes durch ein Unterpulverschweißverfahren an einem Ort der Errichtung des Turmes zusammengefügt und weitere hohlzylindrische und/oder hohlkegelstumpfförmige Turmsegmente für den oberen Bereich des Turms untereinander mittels Flansch- und/oder Schweißverbindungen verbunden werden.

Ein Turm aus Stahl gemäß einem Ausführungsbeispiel für eine Windenergieanlage ist dadurch gekennzeichnet, dass der Turm in einem unteren Bereich mindestens zwei hohlzylindrische und/oder hohlkegelstumpfförmige, untereinander durch ein Unterpulverschweißverfahren an einem Ort einer Errichtung des Turms zusammengefügte Turmsegmente und in einem oberen Bereich weitere hohlzylindrische und/oder hohlkegelstumpfförmige, untereinander mittels Flansch- und/oder Schweißverbindungen verbundene Turmsegmente aufweist. Der Ort der Errichtung des Turms kann hierbei beispielsweise sein späterer Betriebsort sein.

Ausführungsbeispielen liegt so die Erkenntnis zu Grunde, dass ein Kompromiss hinsichtlich eines Straßen- und/oder Bahntransports, eines Zusammenfügens von Turmsegmenten vor Ort sowie einer Wartung über eine Auslegungslebensdauer der Windenergieanlage dadurch verbessert werden kann, dass wenigstens einige der Turmsegmente, die hohlzylindrisch und/oder hohlkegelstumpfförmig ausgestaltet sind, in dem unteren Bereich durch das Unterpulverschweißverfahren an dem Ort der Errichtung des Turm miteinander verbunden werden.

Optional können bei einem Verfahren gemäß einem Ausführungsbeispiel die mindestens zwei der hohlzylindrischen und/oder hohlkegelstumpfförmigen Turmsegmente in dem unteren Bereich des Turmes durch ein automatisches Unterpulverschweißverfahren an dem Ort der Errichtung des Turmes zusammengefügt werden. Hierdurch kann es gegebenenfalls möglich sein, gegenüber einem manuellen Schweißverfahren eine höhere Homogenität einer solchen Schweißnaht zu erzielen, da durch den Einsatz eines automatisierten Schweißverfahrens gegebenenfalls eine gleichmäßigere Schweißgeschwindigkeit realisiert werden kann, als dies gegebenenfalls mit einem manuellen Verfahren möglich wäre. Hierdurch kann es gegebenenfalls möglich sein, eine Homogenität und/oder eine Belastbarkeit der resultierenden Schweißnaht positiv zu beeinflussen. Alternativ oder ergänzend kann jedoch gegebenenfalls auch eine Vereinfachung des Verfahrens zur Errichtung eines solchen Turms aufgrund einer höheren Automatisierung und/oder eine Reduzierung von Gefahren für Personal auf der Baustelle erzielbar sein.

Optional kann bei einem solchen Verfahren gemäß einem Ausführungsbeispiel ein das automatisierte Unterpulverschweißverfahren sicherstellende Schweißwerkzeug um bis zu 360° an einer Innen- und/oder Außenwand geführt werden. Hierdurch kann es möglich sein, das Verfahren weiter zu automatisieren bzw. durch eine segmentierte Ausführung des Unterpulverschweißverfahrens zu vereinfachen. Alternativ oder ergänzend kann es gegebenenfalls auch möglich sein, eine Homogenität der resultierenden Schweißnaht weiter zu verbessern.

Ergänzend oder alternativ können bei einem Verfahren gemäß einem Ausführungsbeispiel die mindestens zwei der hohlzylindrischen und/oder hohlkegelstumpfförmigen Turmsegmente in dem unteren Bereich des Turmes durch das Unterpulverschweißverfahren an dem Ort der Errichtung des Turmes aufrecht stehend zusammengefügt werden. Hierdurch kann es gegebenenfalls möglich sein, das Verfahren weiter zu vereinfachen, da kleinere Turmsegmente vor ihrem Zusammenfügen aufgerichtet werden bzw. auch aufrecht transportiert werden können, um so beispielsweise einen größeren Turmfußdurchmesser zu realisieren, an dem gegebenenfalls die größten Belastungen auftreten können.

Ergänzend oder alternativ können bei einem Verfahren die hohlzylindrischen und/oder hohlkegelstumpfförmigen Turmsegmente vollständig oder teilweise in dem unteren Bereich des Turmes bereits in nicht mit einem Fundament verbundener, liegender Position auf der Baustelle umlaufend miteinander verschweißt werden. Auch hierdurch kann gegebenenfalls eine Vereinfachung des Verfahrens erzielt werden. So können beispielsweise einige der Turmsegmente vor oder gegebenenfalls auch nach einer aufrecht stehenden Verschweißung mit anderen Turmsegmenten in liegender Position verschweißt werden. Je nach konkreter Ausgestaltung eines Turms können so unterschiedliche Verfahren eingesetzt werden, die den jeweiligen Bedingungen angepasst sind.

Ergänzend oder alternativ kann ein Verfahren gemäß einem Ausführungsbeispiel dadurch gekennzeichnet sein, dass mindestens ein unteres Turmsegment eine für einen aufrechten Straßen- oder Bahntransport angepasste Höhe und mindestens ein oberes Turmsegment eine für den liegenden Straßen- oder Bahntransport angepassten Durchmesser aufweist. Optional kann dies natürlich für mehrere der oberen und/oder unteren Turmsegmente bzw. auch für alle der oberen und/oder unteren Turmsegmente gelten. Hierdurch kann das Verfahren hinsichtlich seiner Durchführung gegebenenfalls weiter vereinfacht und so der vorgenannte Kompromiss verbessert werden.

Optional können bei einem Turm aus Stahl gemäß einem Ausführungsbeispiel die mindestens zwei hohlzylindrischen und/oder hohlkegelstumpfförmigen Turmsegmente in dem unteren Bereich untereinander durch ein automatisches Unterpulverschweißverfahren zusammengefügt sein. Hierdurch kann es gegebenenfalls möglich sein, das Verfahren zu vereinfachen und so den vorgenannten Kompromiss zu verbessern.

Ergänzend oder alternativ können bei einem Turm aus Stahl gemäß einem Ausführungsbeispiel die mindestens zwei hohlzylindrischen und/oder hohlkegelstumpfförmigen Turmsegmente in dem unteren Bereich untereinander aufrecht stehend durch das Unterpulverschweißverfahren zusammengefügt sein. Auch hierdurch kann es gegebenenfalls möglich sein, seine Errichtung zu vereinfachen.

Ergänzend oder alternativ können bei einem Turm gemäß einem Ausführungsbeispiel mindestens die beiden oberen hohlzylindrischen und/oder hohlkegelstumpfförmigen Turmsegmente Flanschverbindungen aufweisen. Durch diese können beispielsweise die betreffenden Turmsegmente miteinander verbunden, also beispielsweise miteinander verschraubt werden. Hierdurch kann es gegebenenfalls möglich sein, die Wartung des Turms zu vereinfachen, indem in dem schwieriger zugänglichen oberen Bereich beispielsweise eine leichter wartbare Verbindungstechnik zum Einsatz kommt.

Ergänzend oder alternativ kann ein Turm aus Stahl gemäß einem Ausführungsbeispiel dadurch gekennzeichnet sein, dass der Turm aus mindestens einem unteren Turmsegment mit einer für einen aufrechten Straßen- oder Bahntransport angepassten Höhe und aus mindestens einem oberen Turmsegment mit einem für den liegenden Straßen- oder Bahntransport angepassten Durchmesser besteht. Hierdurch kann gegebenenfalls eine Vereinfachung seiner Errichtung möglich sein.

Nachfolgend werden Ausführungsbeispiele unter Bezugnahme auf die beiliegenden Figuren näher erläutert.
- Fig. 1: zeigt eine schematische Querschnittsdarstellung einer Windenergieanlage mit einem Turm gemäß einem Ausführungsbeispiel;
- Fig. 2: zeigt schematisch drei untere Turmsegmente eines Turms gemäß einem Ausführungsbeispiel;
- Fig. 3: zeigt eine schematische Querschnittsdarstellung einer Windenergieanlage mit einem Turm gemäß einem Ausführungsbeispiel;
- Fig. 4: zeigt eine schematische Querschnittsdarstellung einer Windenergieanlage mit einem Turm gemäß einem Ausführungsbeispiel; und
- Fig. 5: zeigt eine schematische Querschnittsdarstellung einer Windenergieanlage mit einem Turm gemäß einem Ausführungsbeispiel.

Einige Ausführungsbeispiele werden nun ausführlicher unter Bezugnahme auf die beiliegenden Figuren beschrieben. In den Figuren können die Dickenabmessungen von Linien, Bereichen, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Wie bereits eingangs beschrieben wurde, können gegebenenfalls durch die Steigerung der Nabenhöhe von Windenergieanlagen höhere Erträge erreicht werden, da die Windgeschwindigkeit im Allgemeinen mit dem Abstand von der Geländeoberkante zunimmt. Windenergieanlagen werden üblicherweise mit Stahl-, Beton-, Holz- oder Hybridtürmen in Rohr- oder Gitterbauweise realisiert.

Bei der Errichtung von Windenergieanlagen werden oft Stahlrohrtürme aufgrund der geringen Masse und des schnellen Aufbaus bevorzugt. Da der Straßen- und Bahntransport eines Turmes mit einer Höhe von oft mehr als 100 m aufgrund der Größenbeschränkungen auf den Transportwegen nicht als Einzelteil möglich ist, werden zunächst Segmente mit einer Höhe von meist 10 - 30 m gefertigt und auf der Bausteile bei der Errichtung des Turms miteinander verbunden.

In der EP 2 317 139 A2 wird ein Turm mit einer Vielzahl von axialen Turmsegmenten beschrieben, wobei der Turm mindestens ein unteres, nahe am Fundament des Turms angeordnetes axiales Segment mit einem nicht-kreisförmigen Querschnitt und mindestens ein oberes, in der Nähe der Oberseite des Turmes angeordnetes Turmsegment mit einem kreisförmigen Querschnitt aufweist. Mit dieser Lösung ist es möglich, Turmsegmente von großen Windkraftanlagen mittels Schienenverkehr zu transportieren.

Die EP 2 278 157 A2 offenbart einen Turm für große Windkraftanlagen, dessen Rohrsektionen in Ihrem Durchmesser so begrenzt sind, dass dieser mittels Schienenverkehr transportiert werden kann. Der Turm besteht aus einer Vielzahl von axialen rohrförmigen Segmenten, wobei das unterste Segment zum Fundament eine konische Form aufweist, dessen kleinerer Durchmesser auf der Fundamentseite und der größere Durchmesser auf der Seite der weiteren Segmente liegt.

Zunehmende Rotordurchmesser, Nabenhöhen und Generatorleistungen führen zu höheren abzutragenden Lasten, sodass die unteren Segmente des Turmes in Ihrem Durchmesser vergrößert werden müssen. Dabei wird oft ein Durchmesser notwendig, der als Einzelteil Brückendurchfahrten nicht mehr zulassen würde. Lösungsansätze sind hierfür die zusätzliche Längssegmentierung oder das Errichten von Türmen in Hybridbauweise, bestehend aus einem unteren Beton- oder Gittermast-Turmabschnitt sowie einem oberen Stahlteil.

Die DE 10 2005 033 600 B3 betrifft einen Turm für eine Windenergieanlage mit einem als Fachwerkturm ausgebildeten unteren Turmabschnitt, welcher zumindest an seinem oberen Ende einen polygonförmigen Querschnitt aufweist und einem als Rohr ausgebildeten oberen Turmabschnitt, welcher an seinem unteren Ende eine an den polygonförmigen Querschnitt des unteren Turmabschnittes angepasste Querschnittsform und an seinem oberen Ende eine kreisförmige Querschnittsform aufweist.

Ein Hybridturm eines Windkraftwerkes mit einer Nabenhöhe von mehr als 110 m Höhe wird in der DE 10 2005 047 961 A1 offenbart, wobei ein Bauteil als eine Fachwerkkonstruktion ausgebildet ist und ein anderes Bauteil einen rohrförmigen Mastbereich des Turmes eines Windkraftwerkes darstellt. Der rohrförmige Mastbereich erstreckt sich mindestens über eine Länge von 10 m.

In der DE 10 2007 018 025 A1 wird ein Windenergieanlagenturm mit einer tragenden Turmwand beschrieben, wobei die Turmwand eine umlaufende, äußere Begrenzungsfläche aufweist und aus einer Vielzahl von Wandabschnitten besteht. Die Wandabschnitte weisen jeweils einen Mittelabschnitt und zwei in Längsrichtung des Turms verlaufende Randabschnitte auf, die mit einer Vielzahl von Verbindungsbohrungen versehen sind, wobei die von den Randabschnitten definierten Flächen entlang der äußeren Begrenzungsfläche oder in konstantem Abstand dazu verlaufen und die Verbindungsbohrungen quer zu der äußeren Begrenzungsfläche ausgerichtet sind.

DE 10 2008 053 454 A1 betrifft ein hybrides Turmbauwerk, insbesondere für Windenergieanlagen mit einem Fundament, mit einer auf dem Fundament errichteten Betonturmsäule und mit einem sich daran anschließenden Stahlturmelement. Die Betonturmsäule wird durch entlang der Turmlängsachse aneinander anschließende Betonturmwandabschnitte gebildet, wobei die Betonturmwandabschnitte einen ringförmigen Querschnitt aufweisen. Zur Beaufschlagung der Betonturmsäule mit einer Vorspannung sind mehrere innerhalb des von der Betonturmsäule eingeschlossenen Hohlraumes verlaufende, externe Spannglieder vorgesehen.

In der DE 20 2004 006 633 U1 wird ein Mast für Windkraftanlagen mit einer Bauhöhe von über 100 m offenbart. Der Mast besteht aus einem Unterteil nach Art eines Gittermastes und einem Oberteil aus einem Rohrmantel, wobei das Oberteil mit dem Unterteil lösbar verbunden ist.

In der EP 2 006 471 B1 wird ein Windkraftanlagenturm und ein Verfahren zur Montage des Windkraftanlagenturmes beschrieben, der aus einer Anzahl von Segmenten mit einem polygonalen Querschnitt besteht, wobei jedes polygonale Segment aus einer Anzahl von flachen Platten besteht, die miteinander verbunden sind.

Bei der Fertigung solcher Stahlturmsegmente kommen im Stand der Technik gewalzte Stähle mit einer Streckgrenze von meist 355 N/mm² oder weniger zu Einsatz. Die Verbindung einzelner Komponenten der Segmente eines solchen Stahlturms erfolgt mit dem Unterpulverschweißverfahren unter Berücksichtigung der Normen DIN 18800 bzw. DIN EN 1993. Die Verbindung der Turmsegmente erfolgt bei der Errichtung des Turmes durch entsprechende Flanschverbindungen, wobei die Turmsegmente bei ihrer Montage an ihren Enden mit T- oder L-Flanschen versehen sind und bei der Errichtung des Turmes mit Schrauben, Bolzen oder anderen Befestigungsmitteln verbunden werden.

Die DE 20 2011 001 695 U1 beschreibt einen Stahlturm, insbesondere für eine Windkraftanlage, der aus mehreren übereinander angeordneten und mittels Flanschen miteinander verbundenen einteiligen Stahlturmsegmenten und einer Versorgungsstation besteht, wobei unter dem untersten einteiligen Stahlturmsegment mindestens ein mehrteiliges, längs geteiltes Stahlturmsegment angeordnet ist. Das mehrteilige Stahlturmsegment besteht aus mindestens zwei über den Kreisumfang des Stahlturmsegmentes unterteilten Segmentschalen, wobei die jeweils benachbarten Segmentschalen an ihren vertikalen Rändern über jeweils eine Verbindung, insbesondere durch eine Verschraubung, kraftschlüssig miteinander verbunden sind.

In der DE 10 2010 039 796 A1 wird ein Turm einer Windenergieanlage beschrieben, wobei der Turm einen unteren rohrförmigen Turmabschnitt aus Beton und einen oberen rohrförmigen Turmabschnitt aus Stahl sowie ein Adapterstück zur Verbindung der beiden Turmabschnitte aufweist. Das Adapterstück besteht aus einem ringförmigen Betonelement und einem Stahlelement, wobei das Stahlelement zumindest einen ringförmigen Flansch beinhaltet, der eine in Einbaulage obere Oberfläche des Betonelements vollständig bedeckt. Das Stahlelement ist mit dem Betonelement direkt vergossen, wobei der ringförmige Flansch vollständig und ohne Lufteinschlüsse untergossen ist. Bei einem Verfahren zur Herstellung eines Turms mit einem Adapterstück wird zur Herstellung des Adapterstücks ein Stahlelement mit einem ringförmigen Flansch kopfüber in eine ringförmige Schalung eingelegt. Anschließend wird ein Betonmaterial in die Schalung eingebracht, um ein ringförmiges Betonelement des Adapterstücks herzustellen, wobei das Betonmaterial direkt auf die spätere Unterseite des Flansches aufgebracht wird.

Die EP 1 606 514 B1 offenbart einen Stahlturm für eine Windkraftanlage, der mehrere zylindrische oder konisch zulaufende Turmsektionen umfasst, wobei zumindest deren breitere Sektionen in zwei oder mehr längliche Schalensegmente unterteilt sind, die zu einer vollständigen Turmsektion mittels vertikaler Flansche, die aneinander befestigt werden, kombiniert werden. Die Schalen sind außerdem mit oberen und unteren horizontalen Flanschen versehen, um eine Verbindung der Turmsektionen übereinander zu ermöglichen.

Der in der DE 60 2005 002 760 T2 beschriebene vieleckige Turm für eine Windturbine besteht aus zumindest teilweise vorgefertigten Metallwandteilen, wobei jedes Wandteil einen flachen und viereckigen Abschnitt umfasst, der eine nach außen weisende Fläche in Richtung auf das Äußere des Turmes sowie eine nach innen weisende Fläche in Richtung auf das Innere des Turmes hat. Weiterhin weisen diese Abschnitte eine als Flansch ausgebildete obere Kante, eine untere Kante, eine erste seitliche Kante und eine zweite seitliche Kante auf. Die als Flansche ausgebildeten Kanten werden mittels geeigneter Befestigungsmittel, wie Schweißnähte, Nieten oder Verschraubung, fest verbunden.

Die EP 2 192 245 B1 betrifft eine Windenergieanlage mit einem Turm, wobei der Turm wenigstens aus einer Turmsektion besteht, die mit mindestens einem Flansch versehen ist und zumindest einen Teil der Wand des Turmes bildet. Die Windenergieanlage besteht ferner aus einer weiteren Turmsektion mit mindestens einem Flansch, der der Installation des benachbarten Turmabschnittes dient. Die Flansche sind durch Verschraubungen mit Bolzen und Muttern lösbar miteinander verbunden. Die Schrauben und Muttern weisen auf ihrer vom Flansch abgewandten Fläche mehrere Vertiefungen zum Aufnehmen von Vorsprüngen von Anzugsvorrichtungen auf.

In der DE 101 26 049 A1 wird ein ringförmiger Verbindungsflansch für Turmsegmente mit einer konischen Form bekannt gegeben, um Schäden infolge einer bestimmungsgemäßen Beanspruchung zu vermindern. Die Flansche sind durch Bolzen befestigt.

In der WO 2007/059768 A1 wird ein Anschluss für Windkraftanlagenturmsegmente vorgeschlagen, wobei an jedem Segment Flansche an ihren Enden vorgesehen sind, die durch Schrauben und Muttern verbunden werden.

In der US 2012/0137620 A1 wird ein Turm einer Windenergieanlage mit einer Turmbasis beschrieben, die über einen Flansch an das Fundament befestigt wird. Dabei ist der Flansch als T-Flansch mit einem inneren und einem äußeren Abschnitt ausgebildet. Der innere Abschnitt, der sich von der rohrförmigen Seitenwand radial nach innen erstreckt, weist eine größere Differenz zwischen Innen- und Außenradius auf, als der äußere Abschnitt, der sich radial nach außen von der rohrförmigen Seitenwand erstreckt.

Die EP 2 375 057 A1 beschreibt ein Verfahren, bei dem ein Turm einer Windkraftanlage oder ein Segment eines Turms einer Windkraftanlage mit einem aufnehmenden Fundament verbunden wird. Dabei sind die Turmsektionen zumindest am unteren Ende ohne Flansche ausgestaltet, wobei ein zusätzliches Übergangsstück eine stabile Verbindung herstellt. Das Übergangsstück weist dabei eine H-, C- oder L-Form auf.

Ein Turm für eine Windkraftanlage, bestehend aus einer Vielzahl von übereinander angeordneten Strukturelementen aus Stahl wird in der EP 2 385 245 A1 beschrieben, wobei das untere Strukturelement mit einem Fundament und das oberste Strukturelement mit der Gondel einer Windkraftanlage verbunden ist. Mindestens zwei Strukturelemente bestehen aus Stählen verschiedener Qualitäten, wobei die jeweilige Stahlqualität durch die maximal zulässige Streckgrenze des Stahls bestimmt wird. Jedes Segment ist rohrförmig ausgebildet. Eine Vielzahl von Segmenten bildet den Stahlrohrturm, wobei die Segmente durch Schweißen, Schrauben und/oder Nieten verbunden sind. Dabei wird für Segmente mit einer hohen statischen und dynamischen Belastung eine hohe Stahlqualität eingesetzt.

In der EP 2 077 363 A2 wird ein Windkraftanlagenturm offenbart, der aus rohrförmigen Wandsegmenten besteht, wobei das erste Segment mit einer verjüngten Kante und das zweite rohrförmige Wandsegment mit einer konischen, koplanar zum ersten Segment erweiterten Kante versehen ist. Bei der Montage werden die beiden Segmente mit der verjüngenden und der konisch erweiterten Kante ineinander gesteckt und mit einem Befestigungselement verbunden.

Alternativ zu diesen mechanischen Verbindungsverfahren sind auch andere Fügeverfahren bekannt, beispielsweise unter Verwendung von Schweißpulver.

So wird in der DE 1 515 092 A ein automatisches Fügeverfahren unter Verwendung von Schweißpulver für aus gewölbten Blechen zusammengesetzten Behältern beschrieben, wobei bei Schweißung der waagerechten Rundnähte nach Schließen der Schweißnahtfuge durch eine Wurzel-Lage entlang dem Blechrand unmittelbar unterhalb der zu schweißenden Naht eine Stützrinne für Schweißpulver angebracht wird und die Schweißnaht durch mehrere automatisch mit einem Unterpulverschweißautomaten geschweißte Lagen fertig gestellt wird. Zuerst wird Schweißpulver in die Stützrinne gefüllt und anschließend der Schweißautomat auf Schienen an der Schweißnaht entlang geführt.

Ein Verfahren und eine Vorrichtung zur Herstellung von Schweißnähten in Querposition wird in der DE 21 32 143 A beschrieben, wobei schwere Apparate und Druckbehälter als Einzelteile zur Baustelle transportiert und aus Gründen der Stückgewichte und der Abmessungen dort verschweißt werden. Das Montieren und Zusammenschweißen der Einzelteile zu Fertigapparaten oder Behältern auf Baustellen kann aus Platzgründen fast ausschließlich nur in senkrechter Lage erfolgen und macht somit das Schweißen der Verbindungsnähte in Querposition unumgänglich. Zum Verschweißen der Einzelteile wird eine Nahtform an den Blechkanten hergestellt, deren untere Kante auf beiden Seiten Anschrägungen im negativen Sinne aufweist und das Schweißpulver vor und hinter dem Schweißbad gegebenenfalls unter Zuhilfenahme eines Gases zugeführt wird.

In der DE 10 2010 041 807 A1 wird ein Verfahren zum Verbinden mehrerer zylindrischer Elemente für den Turm einer Windkraftanlage beschrieben. Jeweils zwei Elemente werden an deren zueinander zugeordneten Stirnseiten umlaufend miteinander verschweißt, wobei zwischen den beiden Elementen ein nahezu paralleler, umlaufender Spalt mit einer Breite von 8 - 12 mm vorhanden ist. Durch das mechanisierte MSG- (Metallschutzgas-) Engspalt-Schweißverfahren ist ein schnelleres und kostengünstiges Schweißen hoher Qualität möglich. Bevorzugt beträgt der Schweißnaht-Öffnungswinkel zwischen den zueinander zugeordneten Stirnseiten der beiden Elemente mindestens 30°. Die beim MSG-Engspalt-Schweißverfahren verwendete Schweißelektrode wird in der Schweißfuge automatisch nachgeführt, wodurch die Schweißnahtqualität erhöht wird.

Die DE 10 200 179 B4 betrifft ein Verfahren zur Errichtung von Stahlrohrtürmen für Windenergieanlagen aus Segmenten, bei dem zunächst das unterste Turmsegment mit einer in einem Betonfundament verankerten Fundament-Rohrsektion verbunden wird und dann die Segmente unter Baustellenbedingungen mittels des bekannten aluminothermischen Schweißverfahrens (auch bezeichnet als Thermitschweißen, Gießschmelzschweißen oder Zwischengussschweißen) verbunden werden.

Die DE 10 2009 041 383 A1 beschreibt ein Verfahren zum Verbinden von offenen bzw. zweiseitig offenen Hohlkörpern wie Rohrschüsse oder Rohre durch Elektronenstrahlschweißen zur Herstellung von Türmen oder Pipelines. Die Stoßfugen der Stirnseiten der offenen Hohlkörper werden unter Vakuum mit einer Elektronenstrahlkanone durch eine Decknaht verschweißt. Durch die zugängliche Öffnung wird eine Abdichtscheibe für den inneren freien Querschnitt des ersten Hohlkörpers geschoben oder von außen aufgesetzt und danach eine Elektronenstrahlkanone mit einer rotorischen Antriebseinheit in den zweiten Hohlkörper geführt oder die beiden Hohlkörper über diese bis zur Ebene der Stoßfuge geschoben. Die verbliebene Öffnung wird mit einem Abdichtelement verschlossen. Die Stoßfuge wird von innen durch eine Umfangsrundnaht mittels der Elektronenstrahlkanone verschweißt.

Die ausschließliche Nutzung von Flanschverbindungen für große Türme aus Stahl ist aufgrund der durch die zu übertragenden Kräfte und Biegemomente im unteren Turmteil auftretenden hohen Belastungen begrenzt. Insbesondere bei Turmhöhen von 100 m und mehr werden Flanschverbindungen aufgrund der erforderlichen Anzahl und Größe der einzelnen Schraubverbindungen oft zusätzlich oder ausschließlich auf der Außenseite des Turmes realisiert, was jedoch die Anforderung an die Montage und den Umfang der Wartungsarbeiten erhöht. Im Ergebnis ist der Einsatz von Flanschverbindungen somit aus technischen, wie auch aus wirtschaftlichen Gründen häufig beschränkt.

Die ausschließliche Anwendung von Schweißverfahren erfordert bei der Montage eines Turmes aus Stahl einer Windenergieanlage Bauarbeiten in großen Höhen. Dabei ist ein hohes Maß an Sicherheit und Stabilität notwendig, insbesondere wenn die Vorbereitungen oder die Schweißarbeiten manuell erfolgen. Zusätzlich sind während der Betriebsphase der Windenergieanlagen bei solchen Varianten Wartungs- und Inspektionsarbeiten in großen Höhen an der Außenseite notwendig.

Der Einsatz von Hybridtürmen für Windenergieanlagen kann einen hohen Material- und Montageaufwand erfordern und damit sehr aufwendig und kostenintensiv sein, insbesondere für Windenergieanlagen mit einer Nabenhöhe von mehr als 100 m. Ein Hybridturm kann in erheblichem Maße, räumlich getrennt voneinander beispielsweise mehrere Baumaterialien aufweisen, also beispielsweise wenigstens einen Abschnitt aus Stahl und wenigstens einen weiteren, räumlich getrennten, aus einem anderen Material gefertigten Abschnitt, beispielsweise Beton.

Die zusätzliche Längssegmentierung der unteren Turmsektionen hat sich aufgrund des zusätzlichen Material- und Montageaufwandes und der damit verbundenen Aufwands- und Kostenintensivität bisher nicht durchgesetzt.

Eine Herausforderung besteht so darin, ein Verfahren zur Errichtung eines Turmes aus Stahl für Windenergieanlagen und einen Turm aus Stahl für Windenergieanlagen zu schaffen, bei dem sich für den Straßen- und/oder Bahntransport geeignete Turmsegmente vor Ort kostengünstig zusammenfügen sowie über die Auslegungslebensdauer der Anlage warten lassen, wobei die jeweiligen Nachteile von Schraub- und Schweißverbindungen hinsichtlich der Montage- und Wartungsarbeiten weitestgehend vermieden werden sollen.

Diese Herausforderung wird durch ein Verfahren zur Errichtung eines Turmes aus Stahl 7 einer Windenergieanlage 12, bestehend aus mehreren Turmsegmenten 1, 2, 3, 4, 5, 6 gelöst, bei dem mindestens die beiden untersten hohlzylindrischen und/oder hohlkegelstumpfförmigen Turmsegmente 1, 2, 3 im unteren Bereich des Turmes 7 miteinander am Ort der Errichtung des Turmes 7 durch automatisches Unterpulverschweißverfahren aufrecht stehend gefügt werden und weitere Turmsegmente 4, 5, 6 am Ort der Errichtung des Turmes der Windenergieanlage für den oberen Teil des Turmes 7 durch Flanschverbindungen und/oder durch automatisches Unterpulverschweißverfahren miteinander verbunden werden, wobei mindestens die beiden oberen hohlzylindrischen und/oder hohlkegelstumpfförmigen Turmsegmente 5, 6 mittels LFlanschverbindungen im Inneren des Turmes miteinander verschraubt werden.

In einer Ausgestaltung des Verfahrens wird ein Schweißwerkzeug um bis zu 360° an der Innen- und/oder Außenwand geführt, wobei dieses Schweißwerkzeug das automatisierte Unterpulverschweißverfahren umsetzt.

In einer weiteren Ausgestaltung des Verfahrens werden mindestens zwei hohlzylindrische und/oder hohlkegelstumpfförmige Turmsegmente des Turmes 7 bereits in nicht mit dem Fundament verbundener und liegender Position auf der Baustelle umlaufend miteinander verschweißt.

Die Anwendung des Unterpulververschweißens ist besonders geeignet, um die hohen Anforderungen an die Belastbarkeit von Bauteilen im unteren Teil des Turmes einer Windenergieanlage zu erfüllen. Durch den automatisierten Prozess können dabei die Turmsegmente mit geringem Zeitaufwand kostengünstig verschweißt werden.

Die Anwendung von Flanschverbindungen ist besonders geeignet, um einerseits die statischen und dynamischen Anforderungen an die Verbindung von Turmbauteilen im oberen Teil zu erfüllen, aber auch, um durch eine Innenverschraubung eine gute Zugänglichkeit für Montage- und Wartungsarbeiten zu bieten.

Weiterhin ist ein Turm aus Stahl 7 für eine Windenergieanlage 12, der aus mindestens zwei, miteinander verschweißten, unteren Turmsegmenten 1, 2, 3 und aus weiteren über Flansch- und/oder Schweißverbindungen miteinander verbundenen, oberen Turmsegmenten 4, 5, 6 besteht, Gegenstand von Ausführungsbeispielen.

Der Turm aus Stahl 7 für eine Windenergieanlage 12 besteht in einer weiteren Ausführung der Erfindung aus mindestens zwei unteren Turmsegmenten 1, 2, 3 mit einer für einen aufrechten Straßen- oder Bahntransport angepassten Höhe und aus oberen Turmsegmenten 4, 5, 6 mit einem für den liegenden Straßen- oder Bahntransport angepassten Durchmesser.

Somit lässt sich ein Turmfußdurchmesser umsetzen, der größer ist, als die für den liegenden Straßen- oder Bahntransport maximal zulässige Höhe, ohne dass beim Errichten des Turmes einer Windenergieanlage Bauteile parallel zur Turmachse zu verbinden sind.

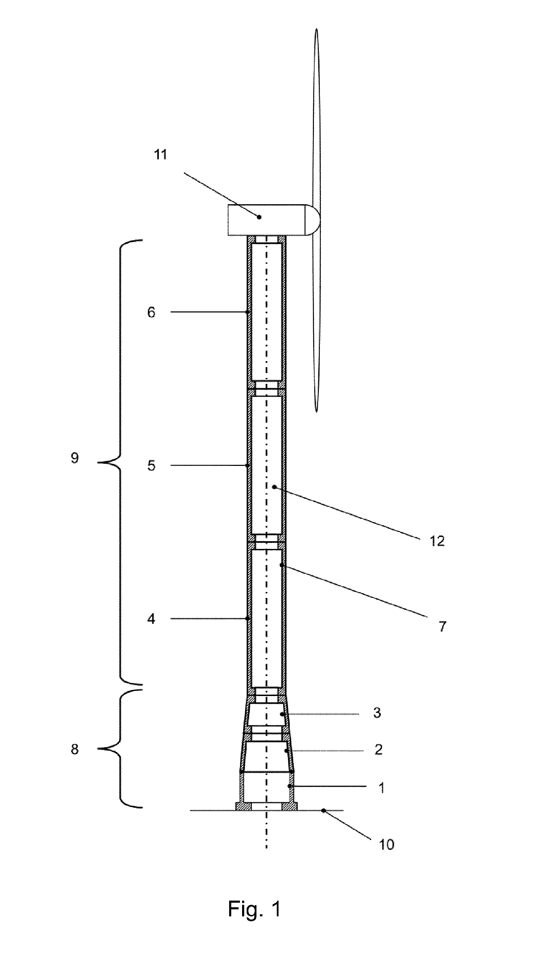

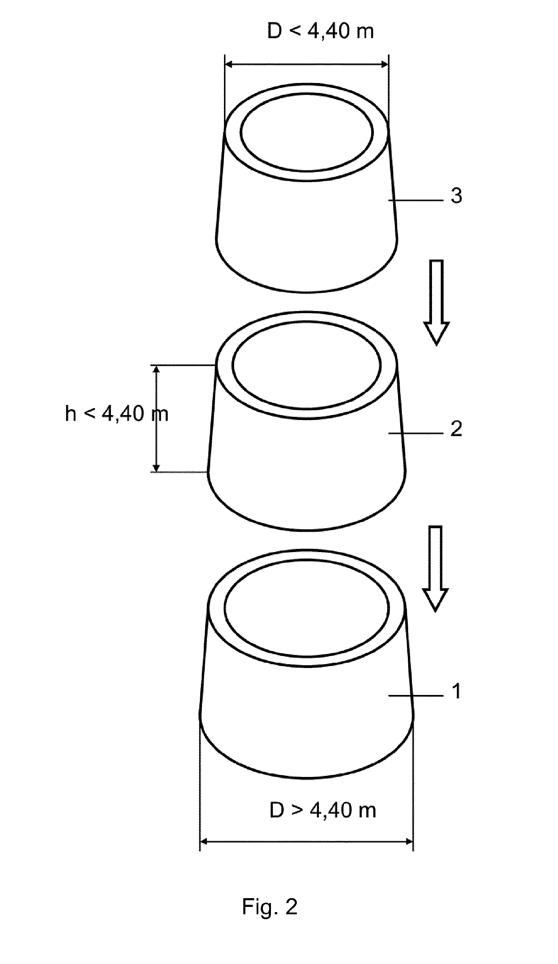

Ausführungsbeispiele werden nun an einem ersten Ausführungsbeispiel anhand der Fig. 1 und 2 näher erläutert, wobei
- 1, 2, 3: hohlzylindrische und/oder hohlkegelstumpfförmige Turmsegmente für die untere Turmsektion,
- 4, 5, 6: hohlzylindrische und/oder hohlkegelstumpfförmige Turmsegmente für die obere Turmsektion,
- 7: den Turm,
- 8: die untere Turmsektion,
- 9: die obere Turmsektion,
- 10: das Fundament,
- 11: das Maschinenhaus mit angeschlossenem Rotor und
- 12: die Windenergieanlage bezeichnen und darstellen.

Dabei zeigt die Fig. 1 als Schnittzeichnung nicht maßstabsgetreu und beispielhaft einen Turm 7 bestehend aus drei hohlkegelstumpfförmigen Turmsegmenten 1, 2, 3 einer unteren Turmsektion 8 und bestehend aus drei hohlzylindrischen Turmsegmenten 4, 5, 6 einer oberen Turmsektion 9.

Die untersten beiden hohlkegelstumpfförmigen Turmsegmente 1, 2 der unteren Turmsektion 8 werden miteinander verbunden, indem die Segmente nacheinander zunächst aufeinander gesetzt werden und mit dem Unterpulverschweißverfahren unter Berücksichtigung der Norm EN ISO 4063: Ordnungsnummer 121 und Ordnungsnummer 125 miteinander verschweißt werden. Dabei können Stahlwerkstoffe mit einer Streckgrenze von höchstens 355 N/mm² nach der Norm DIN EN 10025 eingesetzt werden, aber auch höherfeste Stahlwerkstoffe. Für das Nachweisverfahren und die Herstellerqualifikation kann dabei beispielsweise die Norm DIN 18800 bzw. DIN EN 1993 beachtet werden.

Dabei wird das Schweißwerkzeug umlaufend an der Innenwand der Turmsegmente 1, 2 mit einem automatischen Vorschub geführt, um eine gleichbleibende Schweißgeschwindigkeit zu erreichen und eine hohe Qualität der Schweißnaht zu garantieren. Anders ausgedrückt kann durch den Einsatz eines solchen automatisierten Schweißverfahrens eine Homogenität und damit gegebenenfalls eine Belastbarkeit der Schweißnaht positiv beeinflusst werden.

Anschließend wird ein weiteres hohlkegelstumpfförmiges oder hohlzylindrisches Turmsegment 3 der unteren Turmsektion 8 mit Flanschen im unteren und oberen Bereich aufgesetzt, das im Durchmesser das zulässige Transportmaß nicht überschreitet. Dieses Turmsegment 3 wird mit dem Turmsegment 2, welches im oberen Bereich ebenfalls einen Flansch aufweist, durch Schraubverbindungen verbunden. Anschließend werden die weiteren Turmsegmente 4, 5, 6 aufgesetzt, die dann nacheinander ebenfalls durch L-Flansche im Inneren des Turmes 7 miteinander verbunden werden.

Die Fig. 2 stellt die Position der durch Unterpulverschweißen zu fügenden Turmsegmente 1, 2, 3 für die untere Turmsektion 8 schematisch dar, wobei das Turmsegment 1 einen maximalen Durchmesser von D mehr als 4,40 m (D > 4,40 m), das Turmsegment 3 einen minimalen Durchmesser von D höchstens 4,40 m (D ≤ 4,40 m) und die Turmsegmente 1, 2, 3 eine Höhe h von weniger als 4,40 m (h < 4,40 m), also beispielsweise höchstens 4 m (h ≤ 4 m), aufweisen.

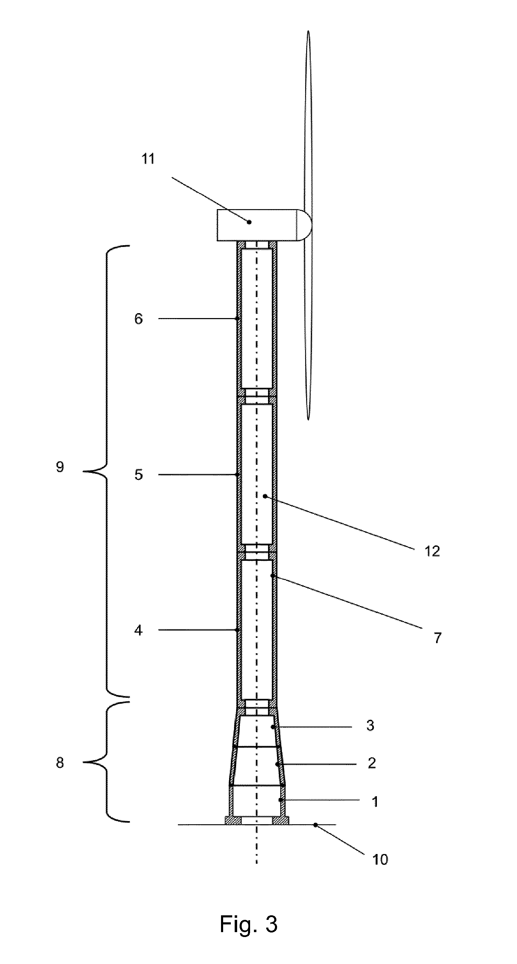

Weitere Ausführungsbeispiele sind in den Fig. 3, Fig. 4 und Fig. 5 dargestellt, wobei die oberen Turmsegmente 4, 5, 6 nicht ausschließlich durch Flansch-, sondern auch durch Schweißverbindungen miteinander verbunden werden können.

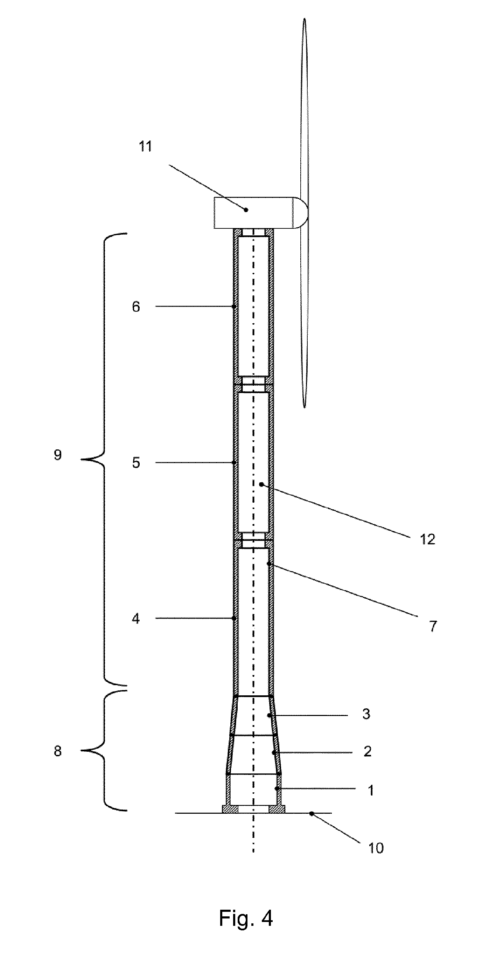

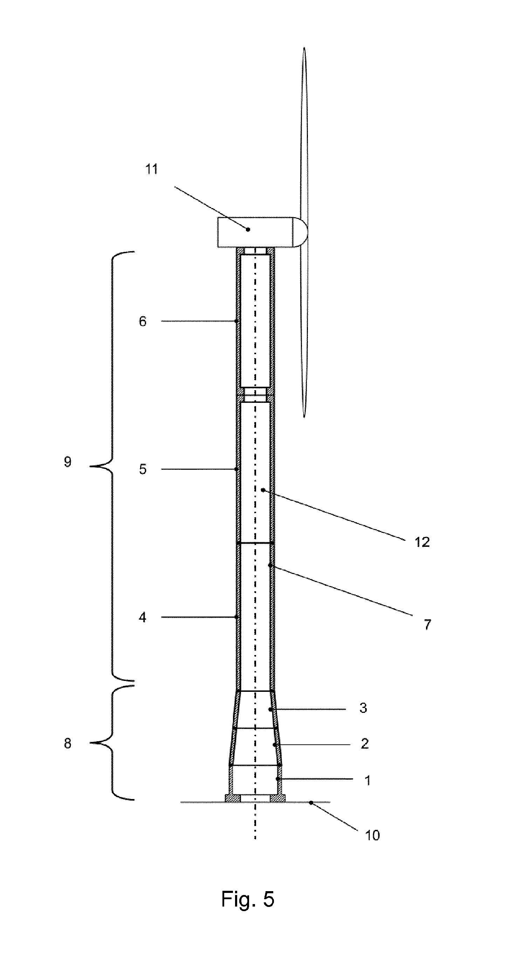

Während also in Fig. 1 beispielsweise die Turmsegmente 1 und 2 mittels der beschriebenen Unterpulververschweißung zusammengefügt sind und die weiteren Turmsegmente der unteren und der oberen Turmsektion 8, 9 durch Flanschverbindungen miteinander verbunden sind, die beispielsweise nur in einem Inneren des Turms 7, gegebenenfalls jedoch ergänzend oder alternativ außen an dem Turm 7 angebracht sein können, zeigen die Fig. 3, 4 und 5 weitere Ausführungsbeispiele, bei denen die Verbindungen der einzelnen Turmsegmente 1, 2, 3, 4, 5, 6 anders ausgeführt sind. So sind beispielsweise bei dem Turm 7 in Fig. 3 die Turmsegmente 1, 2 und 3 miteinander verschweißt, während die Turmsegmente 4, 5 und 6 sowie die Turmsegmente 3 und 4 miteinander mittels Flanschverbindungen miteinander verbunden sind. Bei dem in Fig. 4 gezeigten Ausführungsbeispiel sind die Turmsegmente 1, 2, 3 und 4 durch die beschriebenen Schweißverbindungen miteinander verbunden, während die Turmsegmente 5 und 6 sowie die Turmsegmente 4 und 5 miteinander durch Flanschverbindungen verbunden sind. Fig. 5 zeigt schließlich ein Ausführungsbeispiel, bei dem die Turmsegmente 1, 2, 3, 4 und 5 miteinander verschweißt und nur die Turmsegmente 5 und 6 miteinander mittels einer Flanschverbindung miteinander verbunden sind.

Selbstverständlich können bei Ausführungsbeispielen die Flanschverbindungen umlaufend oder segmentiert, aber auch - unabhängig hiervon - einreihig oder mehrreihig ausgeführt werden. Sie können so beispielsweise teilweise oder vollständig im Inneren des Turms 7, außen an dem Turm 7 oder sowohl im Inneren wie auch außen an dem Turm 7 angeordnet sein, um die betreffenden Turmsegmente miteinander zu verbinden.

Auch wenn in den Figuren nur Türme 7 mit insgesamt jeweils sechs Turmsegmenten gezeigt sind, kann bei anderen Ausführungsbeispielen die Zahl der Turmsegmente selbstverständlich hiervon abweichen. So können beispielsweise Türme 7 gemäß einem Ausführungsbeispiel mit mehr oder weniger Turmsegmenten umgesetzt werden.

Auch kann die Zahl der Turmsegmente zwischen der oberen Turmsektion 9 und der unteren Turmsektion 8 unterschiedlich ausgestaltet sein. So kann die untere Turmsektion 8 unabhängig von der oberen Turmsektion 9 also mehr oder auch weniger als drei Turmsegmente umfassen. Gleiches gilt ebenso für die obere Turmsektion 9.

Je nach konkreter Ausgestaltung kann bei den Turmsegmenten der oberen Turmsektion 9 beispielsweise ein Durchmesser derselben im Wesentlichen oder vollständig konstant bleiben, während eine Veränderung desselben, also beispielsweise eine Verringerung oder Verjüngung mit zunehmendem Abstand von dem Boden (Geländeoberkante) in der unteren Turmsektion 8 vorliegen kann. Gleiches gilt ebenso für die obere Turmsektion 9. Alternativ oder ergänzend können die Turmsegmente der unteren Turmsektion 8 auch beispielsweise eine (im Wesentlichen) identische Höhe, beispielsweise eine identische Höhe zwischen 4 m und 4,40 m, senkrecht zur Oberfläche aufweisen, während die Turmsegmente der oberen Turmsektion 9 wenigstens teilweise oder auch vollständig eine von dieser Höhe abweichende Höhe aufweisen können. Hierbei können gegebenenfalls jedoch wiederum einzelne Turmsegmente der oberen Turmsektion 9 ebenso die gleiche Höhe wie die der unteren Turmsektion 8 aufweisen. So kann beispielsweise auch nur ein einzelnes Turmsegment der oberen Turmsektion 9, das sich unmittelbar an die Turmsegmente der unteren Turmsektion 8 anschließt, eine abweichende Höhe aufweisen. Diese beiden Beispiele stellen jedoch Möglichkeiten dar, wie sich die Turmsektionen 8, 9 voneinander unterscheiden können. Die Turmsegmente der beiden Turmsektionen können sich aber auch durch andere Merkmale oder Gegebenheiten, wie etwa Wandstärken, Materialzusammensetzungen oder andere Parameter unterscheiden. Grundsätzlich besteht auch die Möglichkeit, dass die einzelnen Turmsegmente der Turmsektionen 8, 9 im Wesentlichen identisch ausgestaltet sind. Dies kann beispielsweise bei Türmen geringerer Höhe der Fall sein.

Anders ausgedrückt weist ein Turm 7 wenigstens zwei Turmsegmente in der unteren Turmsektion 8 auf, die miteinander mittels des beschriebenen Schweißverfahrens verschweißt sind, wobei dies beispielsweise die beiden unteren Turmsegmente 1 und 2, also von einem Fundament oder einem Boden des Turms 7 aus betrachtet das erste und das zweite Turmsegment sein können. Ein solcher Turm 7 kann darüber hinaus in der oberen Turmsektion 9 wenigstens zwei Turmsegmente aufweisen, die mittels Flanschverbindung miteinander verbunden sind, wobei es sich hier beispielsweise um die beiden letzten Turmsegmente handeln kann, die von dem Boden bzw. Fundament am weitesten entfernt sind.

Es versteht sich, dass die Figuren Ausführungsbeispiele nur beispielhaft darstellen. Weitere Kombinationen in Bezug auf die Anordnung und Anzahl der Segmente verlassen nicht den Rahmen der Erfindung.

Ausführungsbeispiele betreffen so beispielsweise ein Verfahren zum Errichten eines Turmes aus Stahl für eine Windenergieanlage und einen Turm aus Stahl für eine Windenergieanlage, wobei zur Errichtung eines Turmes 7 einer Windenergieanlage 12 hohlzylindrische und/oder hohlkegelstumpfförmige Turmsegmente 1, 2, 3, 4, 5, 6 miteinander verbunden werden. Mindestens zwei hohlzylindrische und/oder hohlkegelstumpfförmige Turmsegmente 1, 2, 3 können hierbei im unteren Bereich des Turmes 7 durch ein beispielsweise automatisch durchgeführtes Unterpulverschweißverfahren beispielsweise am Ort der Errichtung des Turmes 7 gegebenenfalls aufrecht stehend zusammengefügt und mindestens zwei weitere hohlzylindrische und/oder hohlkegelstumpfförmige Turmsegmente 4, 5, 6 für den oberen Bereich des Turms 7 mittels Flanschund/oder Schweißverbindungen untereinander verbunden werden. Der Turm 7 aus Stahl für eine Windenergieanlage 12 kann so beispielsweise aus mindestens einem unteren Turmsegment 1, 2, 3 mit einer für einen aufrechten Straßen- oder Bahntransport angepassten Höhe und mindestens einem oberen Turmsegment 4, 5, 6 mit einem für den liegenden Straßen- oder Bahntransport angepassten Durchmesser bestehen. Anders ausgedrückt kann ein solcher Turm 7 ein oder mehrere entsprechend dimensionierte Turmsegmente umfassen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Verfahren zur Errichtung eines Turmes aus Stahl (7) einer Windenergieanlage (12), bei dem hohlzylindrische und/oder hohlkegelstumpfförmige Turmsegmente (1, 2, 3, 4, 5, 6) miteinander verbunden werden, **dadurch gekennzeichnet, dass** mindestens zwei hohlzylindrische und/oder hohlkegelstumpfförmige Turmsegmente (1, 2, 3) in einem unteren Bereich des Turmes durch ein Unterpulverschweißverfahren an einem Ort der Errichtung des Turmes (7) zusammengefügt und weitere hohlzylindrische und/oder hohlkegelstumpfförmige Turmsegmente (4, 5, 6) für den oberen Bereich des Turms (7) untereinander mittels Flansch- und/oder Schweißverbindungen verbunden werden.

2. Verfahren nach Anspruch 1, bei dem die mindestens zwei der hohlzylindrischen und/oder hohlkegelstumpfförmigen Turmsegmente (1, 2, 3) in dem unteren Bereich des Turmes durch ein automatisches Unterpulverschweißverfahren an dem Ort der Errichtung des Turmes (7) zusammengefügt werden.

3. Verfahren nach Anspruch 2, **dadurch gekennzeichnet, dass** ein das automatisierte Unterpulverschweißverfahren sicherstellende Schweißwerkzeug um bis zu 360° an einer Innen- und/oder Außenwand geführt wird.

4. Verfahren nach einem der vorhergehenden Ansprüche, bei dem die mindestens zwei der hohlzylindrischen und/oder hohlkegelstumpfförmigen Turmsegmente (1, 2, 3) in dem unteren Bereich des Turmes (7) durch das Unterpulverschweißverfahren an dem Ort der Errichtung des Turmes (7) aufrecht stehend zusammengefügt werden.

5. Verfahren nach einem der vorhergehenden Ansprüche, **dadurch gekennzeichnet, dass** die hohlzylindrischen und/oder hohlkegelstumpfförmigen Turmsegmente (1, 2, 3) vollständig oder teilweise in dem unteren Bereich des Turmes (7) bereits in nicht mit einem Fundament verbundener, liegender Position auf der Baustelle umlaufend miteinander verschweißt werden.

6. Verfahren nach einem der vorhergehenden Ansprüche, bei dem mindestens die beiden oberen hohlzylindrischen und/oder hohlkegelstumpfförmigen Turmsegmente (5, 6) mittels Flanschverbindungen miteinander verschraubt werden.

7. Verfahren nach einem der vorhergehenden Ansprüche, **dadurch gekennzeichnet, dass** mindestens ein unteres Turmsegment (1, 2, 3) eine für einen aufrechten Straßen- oder Bahntransport angepasste Höhe und mindestens ein oberes Turmsegment (4, 5, 6) einen für den liegenden Straßen- oder Bahntransport angepassten Durchmesser aufweist.

8. Turm aus Stahl (7) für eine Windenergieanlage (12), **dadurch gekennzeichnet, dass** der Turm (7) in einem unteren Bereich mindestens zwei hohlzylindrische und/oder hohlkegelstumpfförmige, untereinander durch ein Unterpulverschweißverfahren am Ort der Errichtung des Turms (7) zusammengefügte Turmsegmente (1, 2, 3) und in einem oberen Bereich weitere hohlzylindrische und/oder hohlkegelstumpfförmige, untereinander mittels Flansch- und/oder Schweißverbindungen verbundene Turmsegmente (4, 5, 6) aufweist.

9. Turm aus Stahl (7) gemäß Anspruch 8, bei dem die mindestens zwei hohlzylindrischen und/oder hohlkegelstumpfförmigen Turmsegmente (1, 2, 3) in dem unteren Bereich untereinander durch ein automatisches Unterpulverschweißverfahren zusammengefügt sind.

10. Turm aus Stahl (7) gemäß einem der Ansprüche 8 oder 9, bei dem die mindestens zwei hohlzylindrischen und/oder hohlkegelstumpfförmigen Turmsegmente (1, 2, 3) in dem unteren Bereich untereinander aufrecht stehend durch das Unterpulverschweißverfahren zusammengefügt sind.

11. Turm aus Stahl (7) gemäß einem der Ansprüche 8 bis 10, bei dem mindestens die beiden oberen hohlzylindrischen und/oder hohlkegelstumpfförmigen Turmsegmente (5, 6) Flanschverbindungen aufweisen.

12. Turm aus Stahl (7) gemäß einem der Ansprüche 8 bis 11, **dadurch gekennzeichnet, dass** der Turm (7) aus mindestens einem unteren Turmsegment (1, 2, 3) mit einer für einen aufrechten Straßen- oder Bahntransport angepassten Höhe und aus mindestens einem oberen Turmsegment (4, 5, 6) mit einem für den liegenden Straßen- oder Bahntransport angepassten Durchmesser besteht.
